# EUROPEAN PATENT APPLICATION

(11) **EP 1 298 551 A1**
(43) Date of publication of application: **02.04.2003**
(21) Application number: 01123439.0
(22) Date of filing: 28.09.2001
(51) Int. Cl.: G06F 17/60

(54) **Overcoming null deliveries**

(71) Applicant: Siemens Dematic AG, 90475 Nürnberg (DE)
(72) Inventor: Rosenbaum, Walter, 75116 Paris (FR); Rauh, Ingolf, 78479 Reichenau (DE)
(74) Representative: Berg, Peter, Dipl.-Ing.

(57) **Abstract**

A system and method are set out for overcoming null deliveries. A delivery vehicle (22) is tracked (20) during its route. At a select time prior to delivery, the parcel recipient is contacted to determine if the recipient is home (106). Where the recipient is home (110), the parcel is delivered (112). Where the recipient is not at home (114), the driver's manifest (50) is updated (36) to incorporate alternative delivery instructions (68), if any.

## Description

The present invention relates to the delivery of parcels, and in particular, to a system and method of reducing and otherwise overcoming null deliveries. Null deliveries are deliveries executed by a delivery service where the parcel recipient is not at home. The delivery service is not aware of the recipient's absence and attempts to make the delivery.

The delivery segment associated with the physical delivery of the parcel is referred to as the last mile. This segment is of particular interest to delivery services given the opportunity to make contact with a customer (parcel recipient) and establish a business relationship with him/her. The competition for marketshare among the various delivery services also mean that each service continually seeks niches to distinguish and otherwise excel. Accordingly, much focus is placed on making the last mile as efficient and customer friendly as possible.

Delivery services have changed little since their inception over a century ago. A parcel is transported from a sender to a receiver by the delivery service. This traditional form of delivery, Dead Reckoning structure, is maintained on a simple assumption that the receiver is present to receive the parcel. Missing parcel recipients present a serious problem to the driver and delivery service as an estimated 20% or more of deliveries are unsuccessful. The driver is caused to make an unnecessary stop and delivery attempt thereby taking time away from other deliveries. The driver may attempt to leave the parcel with a neighbor, itself an uncertain and time consuming task which may further upset the parcel receiver (the receiver not agreeing to an alternate delivery address). Where delivery has failed, the parcel must be returned to the delivery service and integrated into future deliveries. The delivery service is caused to incur losses for ineffective driver time and duplicative efforts (parcel reintegration). Accordingly, a need exists to overcome null deliveries.

It is an advantage of the present invention to improve the Dead Reckoning delivery process by overcoming null deliveries. It is a further advantage to eliminate the burden on the driver of finding an alternate delivery location. It is still a further advantage to reduce delivery time as a whole thereby providing a competitive advantage for a select delivery service over another. It is a further advantage to provide the parcel recipient with alternate delivery options from the delivery service, the options potentially legally enforceable. These and other advantages are realized by the present system and method of determining in advance if the parcel recipient is present at the delivery address and when absent instituting previously agreed upon alternate delivery instructions.

The present system is centered about a computer network at the delivery service. The network (or single computer depending upon design) is in communication with a surveillance means such as a global positioning system (GPS), database and traffic report. The computer tracks a delivery truck with the GPS signal and at a select time prior to truck arrival at a delivery address, the parcel recipient is contacted by computer communication means. The database stores a manifest list of parcels and their addresses. In addition, a map of the truck territory is also stored. Lastly, a traffic signal may be received by the computer and considered in determining the select time. The communication means with the recipient includes telephone, e-mail, fax, SMS and the like. The driver is also provided with a data receiving unit and is contacted when the recipient is not present. The driver is alerted to alternate delivery instructions if present in the database per a service agreement with the customer. Where non are present, the driver is instructed to ignore the delivery intended for the absent recipient. The driver may be alerted through several means including an updated manifest and optimized driving route.

The present method begins with loading racks into a delivery vehicle and providing the driver with a manifest on a data receiving mobile unit. The manifest is in electronic form and can be remotely updated. The manifest includes an itinerary along with an optimized delivery route. Once in motion, the delivery vehicle is tracked via GPS or similar systems. At a predetermined time prior to arrival of the delivery vehicle at a delivery address, contact with the parcel recipient is initiated to verify recipient presence. After presence is confirmed, the driver proceeds to and with the delivery. Where no presence is confirmed, the driver is notified of the absent parcel receiver, alternate delivery instructions, if any, or to continue with a next delivery.

The above advantages are further achieved by a method of decreasing null deliveries of parcels by a driver from a delivery services to a parcel recipient, comprising the steps of: tracking a delivery vehicle operated by said driver by electronic surveillance means; at a select time prior to arrival of said delivery vehicle at a delivery location, confirming presence of said recipient at said delivery location, said select time calculated by a computer comprising a memory, processor, input and output means; if said recipient is present at said delivery location, informing said driver to initiate delivery; and if said recipient is not present at said delivery location, consulting a service agreement for alternate delivery instructions, and relaying said instructions to said driver for driver execution.

The above advantages are further achieved by a system for overcoming null deliveries by a driver of a delivery service of parcels delivered to a recipient at a delivery location, comprising: a computer including a memory, processor, input means for receiving a plurality of signals indicative of delivery vehicle location with respect to a delivery location, communication means controlled by said processor for communicating with a parcel recipient at said delivery address and receiving confirmation of presence of said recipient at said delivery address, and clock means controlled by said processor for initiating said communicating at a select time prior to arrival of said delivery vehicle at said delivery location; and mobile data receiving means for communicating with said computer, said mobile data receiving means including output means for outputting data received from said computer.

These and other advantages will become clear from the following detailed description and appended claims. The invention will now be described by way of example and with reference to the accompanying drawings in which:
Figure 1 depicts a system according to the present invention;
Figure 2 depicts a flowchart of a method according to the present invention;
Figure 3 depicts a service agreement;
Figure 4 depicts a confirmation of parcel recipient presence at a delivery location;
Figure 5 depicts route reoptimization;
Figure 6 depicts implementation of an alternate delivery instruction; and
Figure 7 depicts implementation of another alternate delivery instruction.

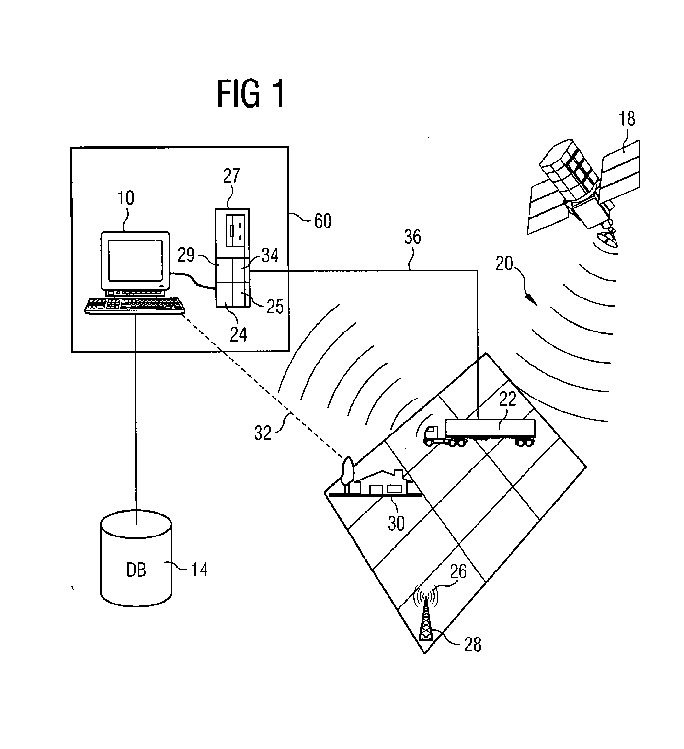

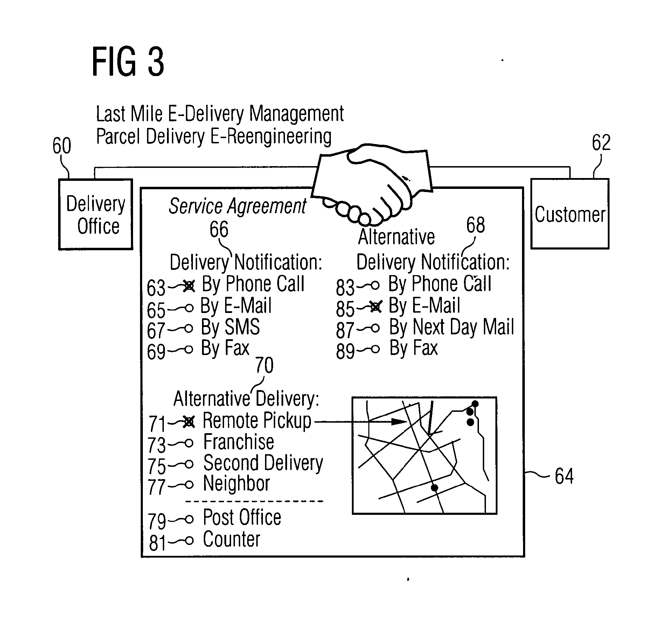

Figure 1 depicts a system according to the present invention. A computer or computer network 10 is located at a delivery service 60. The delivery service 60 may be a private or public delivery service, such as UPS, Federal Express etc. or the US Post Office, etc.. A database 14 is accessible to the computer 10 and may be located locally or remotely. Other memory storage means may be employed as known to one skilled in the art. The database is used for storing service agreements executed between the delivery service 60 and a customer 62 (see figure 3). The customer 62 may be the parcel sender or recipient, or an interested third party. The service agreement (see figure 3) may be in paper or electronic form. When in paper form, the data therefrom is entered manually or scanned such that the data is searchable and selectively retrievable. In addition, the database may include a street map of a route followed by the delivery service delivery trucks. The maps are stored in a format facilitating searching and selective retrieving.

A satellite 18 is a source for the GPS signal 20 used to track delivery truck 22 along its route. The computer 10 is equipped with first means 24 to receive and decode the GPS signal. A traffic report 26 may also be received by the computer as would be generated via radio tower 28, on-line, etc.. The computer includes second means 25 for receiving and decoding the traffic report. The computer includes third means 27 for processing the GPS signal, traffic report, map, and service agreement, so as to determine the location of the delivery address 30, location of the delivery vehicle and the approximate time of arrival of the delivery vehicle at the delivery location. The third means includes a processor, memory and software envisioned by one skilled in the art to perform the invention. The computer includes communication means 29 for communicating a message 32 to a recipient (not shown) at the delivery location 30 a select time prior to arrival of the delivery vehicle at the delivery location. The select time may be determined by a clock means and be for example 10 to 15 minutes. The message may be communicated by telephone, fax, e-mail, SMS or other communicated means. The message format may also be agreed upon in advance as part of the service agreement. As such, the service agreement is consulted by computer 10 (or operator) prior to communication with the recipient. The computer further comprises fourth means 34 for executing the communication with the recipient. Accordingly, an automatic calling unit (not shown) may be employed to execute the telephone communication automatically. Alternatively, a live operator (not shown) may receive instructions to make the call. The fourth means may include a fax and e-mail means such as standard data fax modem. SMS communication is also possible via the fourth means.

The driver of the delivery vehicle is also equipped with a data receiving apparatus (not shown) which is in communication 36 with the computer 10 at the delivery service 12. The data receiving apparatus may comprise a personal digital assistant (PDA), mobile telephone, portable computer and the like. For communicating with the data receiving apparatus, the computer includes other communication means (not shown) as would be appropriate. The aforementioned means comprise standard hardware and software known and readily available to one skilled in the art. Likewise, the programming required for operation of the computer per the method below is not restricted to any one programming language. The programming may be executed by one skilled in the art.

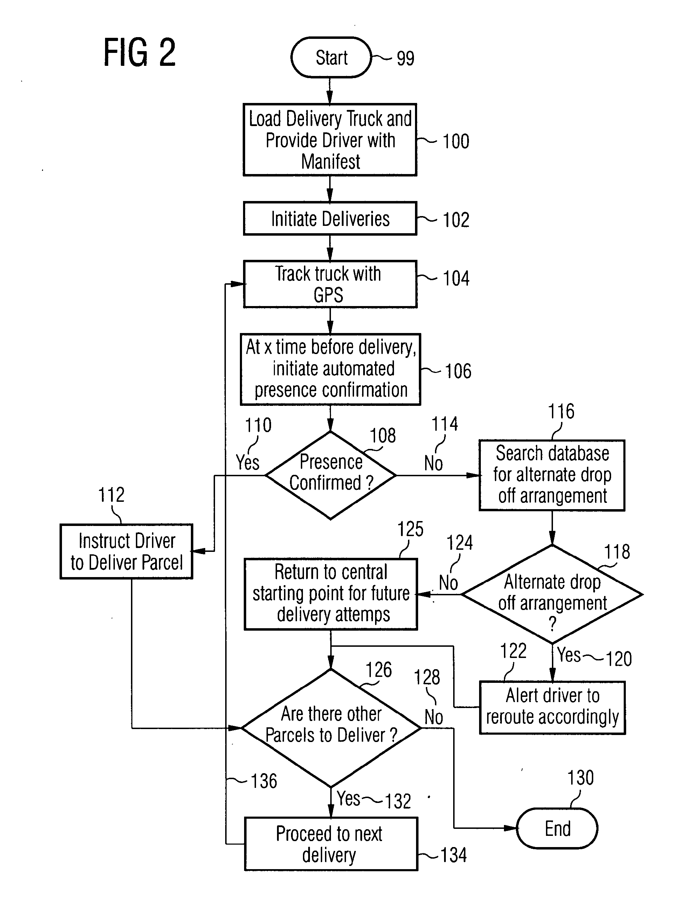

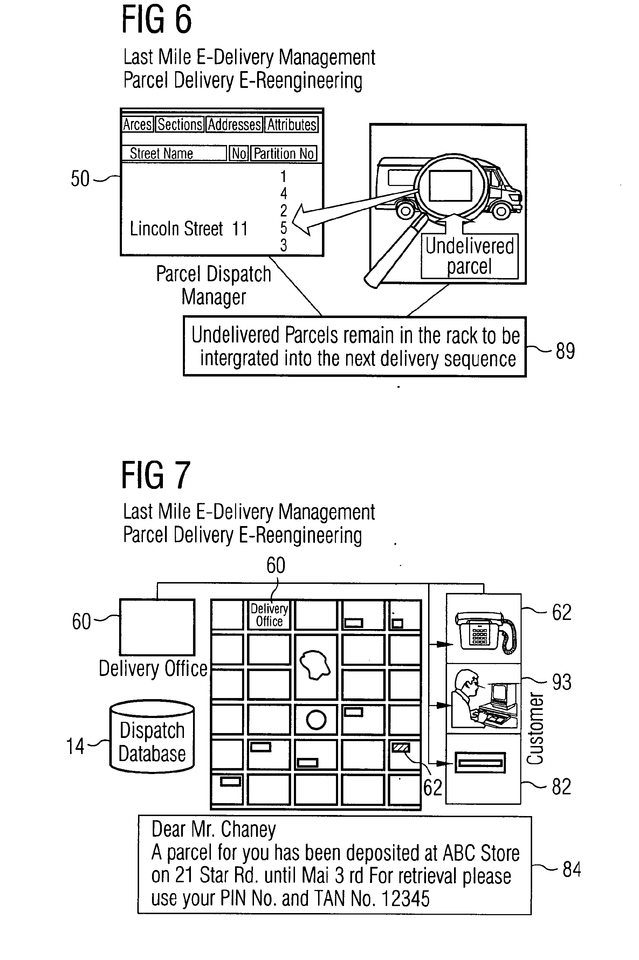

Figure 2 depicts a method flowchart according to the present invention. The method begins at start 99 and proceeds to the next step. A delivery truck is loaded with racks containing parcels and the driver is provided with a manifest indicating which parcels are to be delivered to which addresses along an optimized delivery route 100. The manifest is created by means disclosed in co-pending application entitled *Last Mile Delivery* assigned to Applicant. The driver commences with deliveries 102. As the truck begins its rounds, it is tracked by GPS or the like 104. Accordingly, the position of the truck with respect to its deliveries is determined by comparison of GPS data, map data, manifest data and traffic data as performed by computer 10. At a select time prior to arrival of the delivery truck at a postal address, contact with the recipient is initiated 106. A response from the parcel recipient is then awaited for confirmation of his/her presence 108. If the recipient confirms presence 110, the driver receives instructions to deliver the parcel per manifest instructions 112. Conversely, the driver may have standing instructions to deliver the parcel per the manifest but for later instructions to the contrary. Where the parcel recipient has not confirmed his/her presence 114, a database search is performed for a service agreement involving the parcel 116. The agreement is consulted for any alternate delivery arrangement 118. Where an alternate delivery has been agreed upon 120, the driver is so alerted 122 to reroute delivery accordingly. Where no alternate delivery arrangement is agreed upon 124, the driver is instructed to return the parcel to a central starting point for integration into a future manifest 125 (see figure 6). Conversely, the driver may be under standing instructions that all parcels are to be returned to the central starting point but for instructions to the contrary. A determination is made as to whether other parcels remain to be delivered 126. Where the determination is made by electronic means, the manifest as may be updated by the driver is consulted locally or remotely. If there are no other parcels 128, the method ends 130. If there are other parcels 132, the driver is instructed or otherwise knows to continue to the next delivery 134. At this point, the method continues 136 with tracking the truck via GPS 104 and subsequent steps.

Figure 3 depicts a service agreement 70 entered into by delivery service 60 and customer 62. The service agreement can be a computer stored form which can be filled out locally at the delivery service or on-line by the customer. A standard operation may exist as a base, such that the service agreement is an alternative. The service agreement 70 includes several sections devoted to various delivery options and can have the effect of a legal contract with legal remedies for breach. To this end additional legal language is included as well as means for evidencing agreement such as a signature block (not shown). The layout and exact nature of the sections is a matter of design choice provided the above information is conveyed.

A first section, 66, includes types of delivery notification, including: telephone 63, e-mail 65, SMS 67, and fax 69, and herein telephone 63 was selected. A second section 70 includes alternative delivery locations, including: remote pickup 71, franchise 73, second delivery 75, neighbor 77, post office 79 and counter 81, and herein remote pick up 71 was selected. A third section 68 relates to delivery notification including: telephone call 83, e-mail 85, next day mail 87 and fax 89 and herein e-mail was selected.

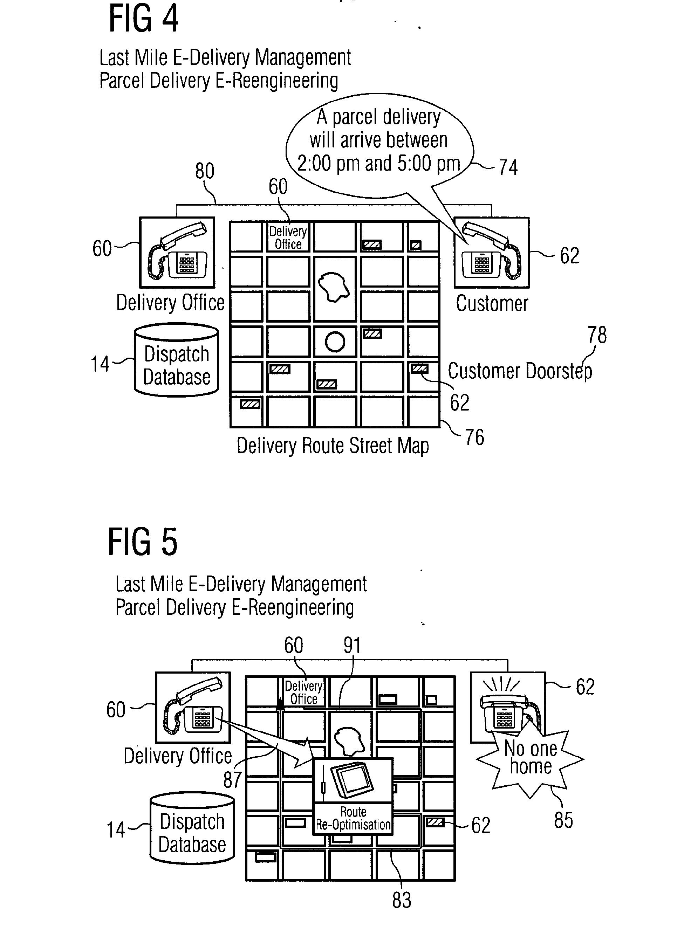

Figure 4 depicts implementation of service agreement 70. Agreement 70 is stored in database 14. A telephone call 80 is initiated by the delivery service 60. Herein, an automated message 74 is played to the customer detailing delivery time. In addition, the message may request a touch tone or voice confirmation. In this alternative, computer 10 includes touch tone (DTMF recognition) or voice receiving and decoding means. Per agreement 70, the parcel is to be left at the customer doorstep 78. Am exemplary delivery route map 76 is also depicted.

Figure 5 depicts receipt of no confirmation 85 from the parcel recipient 62. The service agreement 64 is then retrieved from database 72 and consulted for alternative delivery options 70. Per above, a remote pickup 71 (with map indicator) was selected. Accordingly, the manifest 50 (figure 6) is reconfigured and so relayed to the driver 87 for execution. The driver receives the updated manifest on a mobile data receiving unit 79. At this point, the driver had already commenced his/her route 91 when the updated manifest was received (with instructions). Rather than completing the route to the delivery address 62, the driver reroutes the vehicle 83 to the alternate delivery location. To assist the driver, the manifest may be provided with or accompanied by a map (not shown) which may be remotely updated, by computer 10, and optimized or reoptimized to show a best delivery route including the alternate delivery information. The route update may be effected by routing software known in the art.

Figure 6 depicts execution of a second alternative delivery option, second delivery 75. Herein, the parcel recipient was not present 85 (figure 5) and the parcel remained undelivered. Consultation of the service agreement, here, would indicate a second delivery attempt 75. Accordingly, the parcel is maintained with the delivery vehicle 76, which does not stop at the delivery address. The parcel is further integrated into the next day manifest 89. The parcel was listed in manifest 50.

Figure 7 depicts execution of a third alternative delivery, franchise 73. Herein, the parcel is left at a local franchise or shop (not shown). This delivery option is executed after consultation with the service agreement following a no confirmation of presence of the parcel recipient. A message 84 is conveyed to the customer via telephone 62, computer 93 or fax 82. The parcel is left at the franchise under a TAN or transaction number and PIN or personal identification number, the latter known only to the delivery service, customer and franchise.

## Claims

1. A method of decreasing null deliveries of parcels by a (87) driver from a delivery service (60) to a parcel recipient (30), comprising the steps of:
- Tracking (104), by computer (10), a delivery vehicle (22) operated by said driver by electronic surveillance means (18);
- at a select time prior to arrival of said delivery vehicle (22) at a delivery location (30), confirming presence of said parcel recipient at said delivery location (106), said select time calculated by said computer (10) comprising a memory, processor, input and output means;
- if said recipient is present at said delivery location (110), informing said driver to initiate delivery (112); and
- if said recipient is not present at said delivery location (114), consulting a service agreement for alternate delivery instructions (116), and relaying said instructions to said driver for driver execution (122).

2. The method according to claim 1, wherein said electronic surveillance means (18) is GPS (20).

3. The method according to claim 2, wherein said computer (10) is programmed to receive GPS information (20, 24), manifest information, and traffic information (25, 26) and determine the distance of the delivery vehicle (22) from said delivery location (30) and an approximate time of arrival of said delivery vehicle at said delivery location (27).

4. The method according to claims 1-3, wherein said select time is 10 to 15 minutes.

5. The method according to claims 1-4, wherein said step of confirming presence is performed by automated means controlled by said computer (29).

6. The method according to claims 1-5, wherein said step of confirming presence is performed by a human operator.

7. The method according to claims 1-6, further comprising the steps of:
- providing a manifest to said driver said manifest being in electronic form (100); and
- remotely updating said manifest to indicate presence or non-presence of said recipient at said delivery location.

8. The method according to claim 7, further comprising the step of providing the driver (87) with portable data receiving means (79) and wherein said delivery service (60) further comprises means for communicating with said portable data receiving means (36).

9. The method according to claim 8, wherein said manifest (50) is stored in said portable data receiving means (79) and remotely updated with said alternate delivery instructions (36).

10. The method according to claim 9, wherein said manifest (64) further comprises a map indicating an optimized route of delivery for said parcels and said manifest is remotely updated (36) to include an optimized route of delivery including said alternate parcel delivery address when said recipient is confirmed not present at said delivery location (122).
